Europäisches Patentamt

European Patent Office

Office européen des brevets

(11) Publication number: 0 286 325
A2

# (12) EUROPEAN PATENT APPLICATION

(21) Application number: 88302931.6

(22) Date of filing: 31.03.88

(51) Int. Cl.⁴: B23B 31/22 , B23Q 3/157

(30) Priority: 10.04.87 GB 8708656

(43) Date of publication of application:
12.10.88 Bulletin 88/41

(84) Designated Contracting States:
CH DE ES FR GB IT LI SE

(71) Applicant: LESLIE HARTRIDGE LIMITED
Tingewick Road
Buckingham Buckinghamshire MK18
1EF(GB)

(72) Inventor: Shorrock, Peter
82 High Street
Sharnbrook Bedford MK44 1PE(GB)

(74) Representative: Crouch, David John et al
Bromhead & Co. 30 Cursitor Street Chancery
Lane
London EC4A 1LT(GB)

(54) A machine part with a tool release mechanism.

(57) A machine part with a tool release mechanism,
in which part of the travel of a tool holder (26)
thereof, which is behind a region of travel allocated
to a machining stroke, is used to enable release of a
tool from the tool holder(26).

Fig.2.

## A machine part with a tool release mechanism

The present invention relates to a machine part with a tool release mechanism.

Hitherto, one way of releasing a tool from the tool holder of a machine tool, to enable it to be replaced by a different tool, has been by way of a robotic arm that moves to a clamp device of the tool holder, operates that device to release the tool, withdraws the tool from the holder and retracts to enable a different tool to be inserted in the tool holder. Such apparatus is cumbersome and expensive.

The present invention seeks to provide a tool release mechanism for a machine tool which is simpler and less expensive to make and operates in a simpler manner. Accordingly, the present invention is directed to a machine part with a tool release machanism, in which a part of the travel of a tool holder thereof, which is behind that region of travel allocated to a machining stroke, is used to enable release of a tool from the tool holder.

Thus, the present invention may be directed to a machine part with a tool release mechanism for a machine tool, comprising a tool holder support, a tool holder mounted on the tool holder support in such a manner as to be moveable to and fro along a machine axis defined by the tool holder support, a clamp device arranged on the tool holder to be moveable between a clamp position, in which it retains a tool in the tool holder when the machine part is in use, and a release position in which a tool is readily released from the tool holder, a fixed part of the tool holder support which engages the clamp device when the tool holder is in a first position along the machine axis, and does not so engage the clamp device when the tool holder is in a second position along the machine axis, the fixed part being so positioned on the tool holder support that the transition between engagement and non-engagement between the fixed part and the clamp device occurs when the tool holder is at a position along the said machine axis in which the tool holder is retracted, so that a tool is clamped in the tool holder for the whole of its machining stroke, and is made readily releasable as a result of retraction of the tool holder to a position behind its machining stroke.

Preferably, the said fixed part affords a buffer surface against which a spring-loaded axially moveable part of the clamp device abuts when the tool holder is retracted to a position behind its machining stroke, to move that part against the force of its spring loading to a release position.

The clamp device may further comprise a radially moveable member which is moveable in a radial direction between an engagement position, in which it engages a part of a tool or a part fixed to a tool, and a release position in which it does not so engage a part of a tool or a part fixed to a tool, a surface of the axially moveable part of the clamp device covering the radially moveable part when the axially moveably part is in its clamping position to prevent radial movement of the axially moveable part to its release position.

The said surface of the axially moveable part may be slanted, the surface being nearer to the machine axis at positions further from the said fixed part of the tool holder support. The radially moveable part may be a ball, for example a ball bearing, restrained to radial movement by a radially extending bore in the tool holder.

Although a buffer arrangement for operating a spring-loaded part of the clamp device is preferred, the present invention is not restricted to that arrangement. One alternative would be for the release mechanism to comprise an axially extending tube within which is contained a part of the clamp device that is resiliently urged to expand, but which is inhibited from doing so whilst it remains in the tube, so that when the tool holder is fully retracted, the expandable part of the clamp device is moved to a position rearwardly of the rear end of the tube so that it is free to expand and thereby move the clamping device to its release position.

An example of a machine part with a tool release mechanism for a machine tool, in accordance with the present invention, is illustrated in the accompanying drawings, in which:-

Figure 1 shows an axial sectional view of a drilling part of a machine tool provided with a tool release mechanism shown in the Figure in its release position;

Figure 2 shows, on a larger scale, a part axial-sectional view of a tool holder of the machine part shown in Figure 1, with a clamp device thereof in a clamp position; and

Figure 3 is a diagram showing different relative positions of the tool holder of the drilling part relative to a housing thereof.

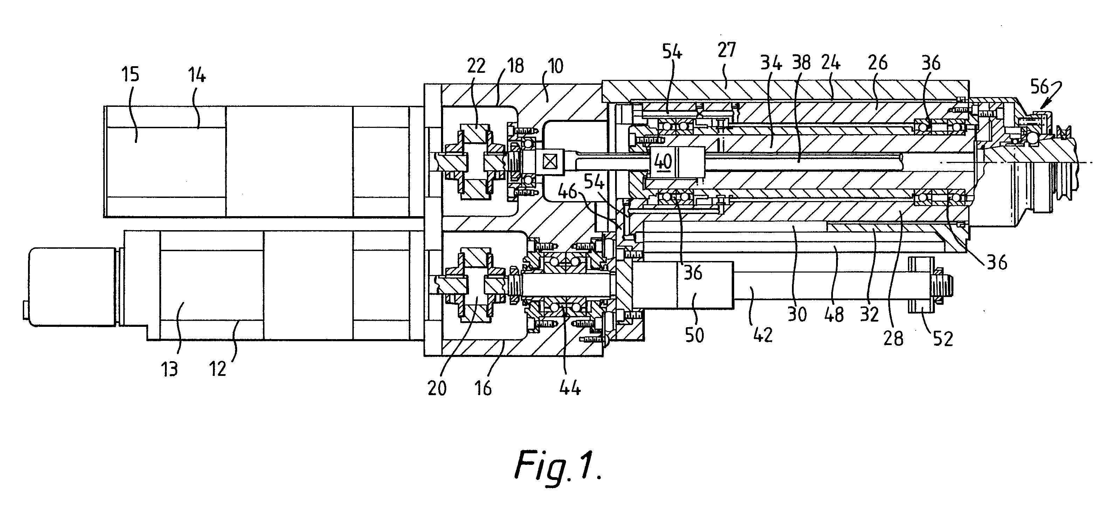

The drilling part of a machine tool shown in Figure 1 comprises a housing 10 having two rearward chambers 12 and 14 containing respective electric motors 13 and 15, two intermediate chambers 16 and 18 which house respective drive couplings 20 and 22, and one elongate forward chamber 24 housing a tool holder assembly 26. The part 27 of the housing 10 which defines the forward chamber 24 provides a support for the tool holder assembly 26. The latter may slide along a machine axis, being the axis of the chamber 24, from the retracted illustrated position to an extended position in which it projects outwardly from the forward chamber 24 a good deal further than as shown in Figure 1. The tool holder assembly 26 has an outer cylindrical member 28 provided with a key 30 which engages a keyway 32 of the part 27 of the housing 10 to constrain the outer member 28 precisely to axial movement whilst preventing rotary movement thereof. Conversely, an inner cylindrical member 34 of the tool holder assembly 26, coaxial with the outer cylindrical member 28, is held therewithin by means of ball or roller bearings 36 which constrain the inner member 34 to rotary movement about the machine axis whilst preventing axial movement relative to the outer member 28. The inner member 34 is coupled to the drive coupling 22 via a splined spindle 38. The spindle and its splines extend axially. A bushing 40 fixed to the interior of the inner member 34 at a rear position thereof is hollow, having an interior the section of which corresponds with a section through the spindle 38 with sufficient tolerance to allow the bushing 40 to slide axially along the spindle 38 as the tool holder assembly 26 slides axially within the housing 10, but to prevent any relative rotary movement between the bushing 40 and the spindle 38. Rotation of the spindle 38 therefore causes rotation of the inner member 34 throughout a range of relative axial positions between the tool holder assembly 26 and the housing 10.

An externally screwthreaded spindle 42 is arranged parallel to the spindle 38, and is rotatably mounted in ball or roller bearings 44. Its rear end is attached to the drive coupling 20 so that it can be rotated about its axis by the motor 13 in the chamber 12. A rearwardly positioned transverse arm 46 is fixed to and extends from the outer cylindrical member 28 through an axial slot 48 of the housing 10. The arm 46 is fixed to an internally threaded sleeve 50 which engages the external threading of the spindle 42. Operation of the motor 13 in the chamber 12, which rotates the spindle 42, therefore causes axial movement of the sleeve 50, and with it, axial movement of the tool holder assembly 26. A stop 52 at the end of the spindle 42 provides a limit to the axial travel of the assembly 26 in an outward direction.

Passageways 54 are provided within the outer cylindrical member 28 to facilitate transfer of lubricating fluid between the various cavities within the forward chamber 24.

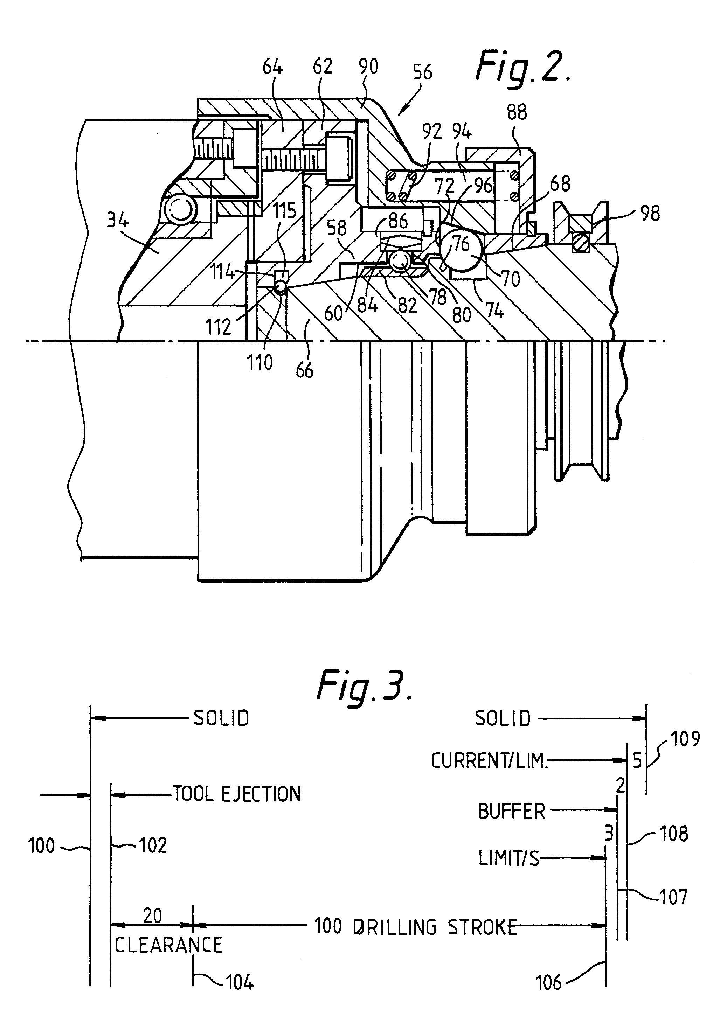

A tool holder 56 is provided at the forward end of the tool holder assembly 26, and is shown more clearly in Figure 2. It comprises a chuck 58 with a generally tapered cylindrical inner surface 60 and an outwardly projecting flange 62 which is bolted to a flanged end 64 of the inner cylindrical member 34. A collet 66 of a tool, such as a drill, has a generally tapered external surface 68 which conforms to the inner surface of the collet 66. The collet 66 is located within the chuck 58. It is held fast against outward axial movement from the chuck 58 by a ball 70, for example, a ball bearing, which is retained in a tapered radially extending bore 72 in the chuck 58 but which protrudes inwardly from that bore. The protruding portion of the ball 70 is received in an annular groove 74 which extends around the tapered surface 68 of the collet. A chamfered edge 76 of the inner edge of the annular groove 74 abuts against the surface of the ball 70 to resist any force tending to remove the tool from the chuck 58. A smaller ball 78 is retained within but protrudes beyond a correspondingly smaller radially extending tapered bore 80 formed in the chuck 58. This ball is received between two splines 82 (only one of which is shown) provided around the circumference of the outer surface of the collet 66. The engagement between the smaller ball 78 and the splines 82 prevents reletive rotational movement between the collet 66 and the chuck 58. The smaller ball 78 can be pushed further into the collet 66 against the restoring force of flange springs 84 contained within a cavity 86 provided within the collet 66. Although only one larger ball 70 and one smaller ball 78 are shown in Figure 2 it will be appreciated that there are a plurality of such balls uniformly spaced apart around the circumference of the collet 66 and the chuck 58. A forward end of the chuck 58 is provided with an outwardly extending cupped flange 88. Around the outside of the chuck 58 there is provided a generally tapered sleeve 90. The forward end of the sleeve 90 fits in the annular recess defined between a forward outer cylindrical surface of the collet 66 and the inner cupped portion of the flange 88. A plurality of compression springs 92 (only one of which is shown in Figure 2) extends from the inside surface of the flange 88 into an axially extending bore 94 in the sleeve 90. The sleeve 90 is therefore able to slide a short distance in an outward axial direction against the return force of the compression springs 92. Thus, the springs 92 urge the sleeve 90 towards the left, viewing the tool holder 56 as in Figure 2. When the sleeve 90 is free to move to the left in that Figure an outwardly tapered inner surface 96 of the free end of the sleeve 90 engages an outer part of the larger ball 70 to prevent the latter from moving in a radially outward direction. The cupped flange 88, the tapered sleeve 90, the compression springs 92, and the larger balls 70 thereby constitute a clamping device which prevents release of the tool from the tool holder 56 when the clamp device is in its clamp position illustrated in Figure 2.

The collet 66 is further provided with a gripping ring 98 by which a tool changer (not shown) can grasp the tool and remove it from or insert it in the tool holder 56.

The illustrated drilling part of the tool release mechanism operates in the following manner.

Operation of the motor 13 rotates the screwthreaded spindle 42 via the coupling 22 to move the sleeve 50 forwards or backwards along the spindle 42 according to the sense of rotation thereof. The precise position of the sleeve on the spindle may be determined by a servo circuit (not shown). This axial movement of the sleeve 50 brings about a corresponding axial movement of the tool holder assembly 26. Irrespective of the position of the tool holder assembly 26 within the housing 10, operation of the motor 15 causes rotation of the splined spindle 38, the inner member 34 of the tool holder assembly 26 via the bushing 40, and consequently the tool holder 56.

The tool is normally held by the clamping device of the tool holder 56 as shown in Figure 2. However, when the tool holder assembly 26 is almost fully retracted, a forward end of the part 27 of the housing 10 abuts against the inner end of the tapered sleeve 90 of the tool holder 56. Further retraction of the tool holder assembly 26 causes a relative axial movement between the tapered sleeve 90 and the collet 66 so that the tapered sleeve 90 moves towards the cupped flange 88. This displaces the inner tapered surface 96 from the larger ball 70 so that the latter is now free to move in a radially outward direction. Thus, any force now acting on the tool to move it away from the holder, such as that exerted by a tool changer (not shown) engaging the gripping ring 98, will cause the chamfered edge 76 to push the larger ball 70 outwardly towards the tapered sleeve 90, thus facilitating ready release of the tool from the tool holder 56. A different tool may now be inserted in the chuck 58, and directly the tool holder assembly 26 is extended outwardly to a part of the axial travel thereof allocated to a drilling stroke of a machine tool, the compression springs 92 return the tapered sleeve 90 to its clamping position.

Figure 3 shows the range of axial movement possible for the tool holder assembly 26 within the housing 10. The position to the extreme left of that Figure, marked 100, represents full retraction when the sleeve 50 abuts the housing 10 and the tapered sleeve 90 is in its release position for tool ejection. The first 5mm moving from that position to the right, to the position marked 102, represents that travel of the tool holder assembly 26 required to move the tapered sleeve 90 fully to its clamping position. The next 20mm represents a clearance between a tool ejection region of travel and a part of the travel allocated to a 100mm drilling stroke from position 104 to position 106 in the Figure. About 3mm beyond that drilling stroke, there is a position 107 at which the sleeve 50 abuts the stop 52 at the end of the screwthreaded spindle 42. The stop 52 is able to yield somewhat to 2mm beyond the position 107 to position 108 at which the power of the motor 13 is insufficient to urge the sleeve 90 any further outwardly, 4mm beyond that the sleeve 50 meets solid resistance from the stop 52, at position 109.

The present invention is not at all limited to the illustrated construction which is described by way of example only. One radically different alternative has already been mentioned in which the release mechanism comprises an axially extending tube and an expandable part of the clamping device within the tube. This would naturally involve an entirely different drive coupling arrangement from the one illustrated. A less radically different alteration would be to dispense with the cupped flange 88 of tool holder 26 and use tension springs instead of compression springs to urge the tapered member 90 towards its clamping position.

To retain the tool weakly against premature relative axial displacement from the tool holder, when the assembly is in the release position and until such time as a robot (not shown) physically removes the tool, a shallow annular groove 110 may be provided around the outside of the collet 66, that groove being engaged by a ball 112 retained within a cavity 114 in the chuck 58 but protruding outwardly therefrom and urged outwardly by a compression spring 115. Alternatively, or in addition thereto, such a weak retaining force may be exerted by the balls 80, the dimensions of the various components being such as to enable those balls 80 to be urged strongly against the bases of the recesses between the splines 82.

## Claims

1. A machine part with a tool release mechanism, characterised in that a part of the travel of a tool holder (56) thereof, which is behind that region of travel allocated to a machining stroke, is used to enable release of a tool from the tool holder (56).

2. A tool release mechanism for a machine tool, characterised by a tool holder support (27), a tool holder (56) mounted on the tool holder support (27) in such a manner as to be moveable to and fro along a machine axis defined by the tool holder support (27), a clamp device (70,88,90,92) arranged on the tool holder (56) to be moveable between a clamp position, in which it retains a tool in the tool holder (56) when the mechanism is in use, and a release position in which a tool is readily released from the tool holder (56), a fixed part of the tool holder support (27) which engages the clamp device (70,88,90,92) when the tool holder (56) is in a first position along the machine axis, and does not so engage the clamp device (70,88,90,92) when the tool holder (56) is in a second position along the machine axis, the fixed part being so positioned on the tool holder support (27) that the transition between engagement and non-engagement between the fixed part and the clamp device (70,88,90,92) occurs when the tool (56) is at a position along the said machine axis in which the tool holder (56) is retracted, so that a tool is clamped in the tool holder (56) for the whole of its machining stroke, and is made readily releasable as a result of retraction of the tool holder (56) to a position behind its machining stroke.

3. A machine part according to claim 2, characterised in that the said fixed part affords a buffer surface against which a spring-loaded axially moveable part (90) of the clamp device (70,88,90,92) abuts when the tool holder (56) is retracted to a position behind its machining stroke, to move that part against the force of its spring loading to a release position.

4. A machine part according to claim 3, characterised in that the clamp device (70,88,90,92) further comprises a radially moveable member (70) which is moveable in a radial direction between an engagement position, in which it engages a part (66) of a tool or a part fixed to a tool, and a release position in which it does not so engage a part (66) of a tool or a part fixed to a tool, a surface (96) of the axially moveable part (90) of the clamp device (70,88,90,92) covering the radially moveable part (70) when the axially moveable part (90) is in its clamping position to prevent radial movement of the radially moveable part (70) to its release position.

5. A machine part according to claim 4, characterised in that the said surface (96) of the axially moveable part (90) is slanted in an axial direction.

6. A machine part according to claim 5, characterised in that the radially moveable part (90) is a ball restrained to radial movement by a radially extending bore (72) in the tool holder (56).

Fig.1.

## Fig.2.

## Fig.3.